# EUROPEAN PATENT SPECIFICATION

(11) **EP 3 083 368 B1**
(45) Date of publication and mention of the grant of the patent: **02.05.2018**
(21) Application number: 14824163.1
(22) Date of filing: 17.11.2014
(51) Int. Cl.: B62D 1/185

(54) **A SEALED, TELESCOPIC STEERING COLUMN COVER**
ABGEDICHTETE, TELESKOPISCHE LENKSÄULENABDECKUNG
HOUSSE ÉTANCHE DE COLONNE DE DIRECTION À ABSORPTION D'ÉNERGIE

(30) Priority: 17.12.2013 TR 201314810
(43) Date of publication of application: 26.10.2016
(73) Proprietor: Turk Traktor Ve Ziraat Makineleri Anonim Sirketi, 06560 Ankara (TR)
(72) Inventor: KARS, Hakan, 06560 Ankara (TR); ERTEN, Ozdemir, 06560 Ankara (TR); SAVAS, Arzu, 06560 Ankara (TR)
(74) Representative: Inal, Aysegul Seda
(86) International application number: PCT/TR2014/000438
(87) International publication number: WO 2015/094136

(56) References cited:
- DE-A1- 10 238 655
- GB-A- 490 959
- US-A- 4 826 466

## Description

### Technical Field

This invention is related to a sealed, telescopic steering column cover developed particularly for tractors and developed to eliminate adverse conditions (corrosion, wear, life-shortening, etc.) resulting from weather conditions (sun, rainwater, dust, etc.) and from the protective bellows of the power steering tearing in time and to ensure that power steering operates efficiently for a longer period of time.

### Prior Art

In tractors, protecting the steering column from external factors is directly related to the service life of the internal parts of the column and the related connections. For this reason, sealing the said column from external factors as much as possible has been an important subject of study for many years.

Nowadays, in the parts where the power steering lever and rear bodywork column found in tractors are in contact, safety members such as bellows are used to seal these parts from the external environment. Especially in platform tractors, this protective bellow found in the power steering which is a telescopic feature of the tractor is torn over time. Moreover, adverse situations such as corrosion, wear, and life-shortening occur in the related parts due to sun, rainwater, dust, and similar physical conditions. Various studies are being carried out to eliminate these problems and to ensure that the power steering lever and the related parts are fully functional over a longer period of time.

The invention of application number TR2011/04546 of the prior art, provides the technical details of a steering bellow used between the vehicle's cabin and steering column and which surrounds the said steering column. In the said invention, the raising and lowering, turning, sealing and insulation of the steering column from the parts between the cabin and the steering is provided by means of the said steering bellow. Moreover, it is well-known that tears may occur on these bellows. In such a case, the said bellow is no longer able to protect the steering column from external factors. For this reason, it is insufficient in today's tractors and problems due to tears in the said bellow may be eliminated by means of using a steering column cover that consists of two separate sealing members instead of a bellow, as proposed by the invention described in detail in this description.

The bellow used in the applications described above does not extend across the full length of the steering column and is used with part of it being uncovered, depending on the movement of the steering. In this case, the steering column causes the steering wheel to be come across direct exposure to the external environment, especially during certain movements, and this leads to premature wear. Application number TR2008/07242 of the prior art aims to eliminate this problem. This application aims to protect the technical parts of the steering between the vehicle's cabin and steering column from deformations that may be encountered by means of a bellow. In the invention of the said application, optimal adjustment of tractors and work machinery according to the physical condition of the operator and according to the operator's method of use and an assembly which protects the part of the steering that remain in the open as a result of movement of the steering is described. However, this practice is insufficient and as a result of the said bellows deforming and tearing in time, it is not possible to protect the internal parts of the steering column from external factors. At the same time, the application described below in detail uses a completely different telescopic steering column cover rather than a bellow. By this means, the steering column is completely covered (sealed from external environment) and as a result of cover consisting of sealing members being used, the problem of the bellow tearing and problems associated with this are completely eliminated.

Moreover, it is known that various studies are being carried out in addition to the said bellow applications in the prior art. These generally include disadvantages such as a variety of challenges related to the components being installed in the assembly stage and due to them not having the ability to be used in other tractors, not consisting of sealing feature or not being able to prevent the steering column from being exposed to the external environment as it does not surround it during all of its Furthermore, document DE 102 38 655 A1 discloses the preamble of claim 1.

### Objective and Brief Description of the Invention

The objective of the invention is to surround the steering column at each movement of the steering wheel by means of a telescopic steering column cover on top of the steering column to protect the column against the effects of the external environment.

Another objective of the invention is to eliminate undesired situations such as breaking, tearing, leakage of rainwater inside the column observed in bellows, by means of the cover consisting of sealing members.

This invention is related to a sealed, telescopic steering column cover for tractors and consists of at least two sealing members both on the bottom and the top part of the said cover.

By means of the bottom sealing member found on the bottom part of the telescopic steering column cover, hot-cold air, heat, dust, steam coming from the motor air through the rear bodywork do not reach the bearing members, fastening members, steering column members inside the column. By means of the cover top sealing member, deformation and wear due to external factors is also prevented.

The steering column cover described in this invention is installed in a simple and practical manner. The telescopic cover bottom part is connected to the rear bodywork by means of a connection clamp and bolts, while the cover top part is connected to the steering wheel center point by means of bolts. By this means, the steering column cover gains a telescopic feature set to match any height of the height adjustable steering column and thus carries out its functionality seamlessly.

By means of the steering column cover of the invention, the service life of the steering column and the related parts and increased and post-sales problems are eliminated.

Additionally, the cover described in this invention can also be easily installed on tractors manufactured with small modifications.

### Description of the Figures of the Invention

The figures used in order to better explain the sealed, telescopic steering column of the invention and the related descriptions are provided below.
Figure-1: An exemplary view of the prior art related to the invention.
Figure-2: An exemplary view of steering system containing a sealed, telescopic steering column cover.
Figure-3: A general view of the sealed, telescopic steering column cover.
Figure-4: The top (a) and bottom (b) view of the said telescopic cover bottom part as it is connected to the rear bodywork.
Figure-5: An exemplary view of the telescopic top part as it is connected to the steering wheel.
Figure-6: An exemplary view of the cover top sealing member (7) and the cover bottom sealing member (8).
Figure-7: An exemplary view of the lowest level position of the height adjustable steering column.
Figure-8: An exemplary view of the highest level position of the height adjustable steering column.

### Definitions of the Components/Sections/Parts Forming the Invention

In order for the sealed, telescopic steering column of the invention to be better understood, the parts and sections in the figures have been numbered, as specified below.
1. Steering wheel
2. Sealed, telescopic steering column cover
3. Height adjustable steering column
4. Rear bodywork
5. Telescopic cover bottom part
6. Telescopic cover top part
7. Cover top sealing member
8. Cover bottom sealing member
9. Connection bolts to the steering wheel
10. Connection clamp and bolts to the rear bodywork
11. Steering wheel (prior art)
12. Steering column bellow (prior art)
13. Height adjustable steering column (prior art)
14. Rear bodywork (prior art)

### Detailed Description of the Invention

Various safety elements such as bellows are used particularly in platform tractors to protect the power steering columns generally found in tractors from external environment factors.

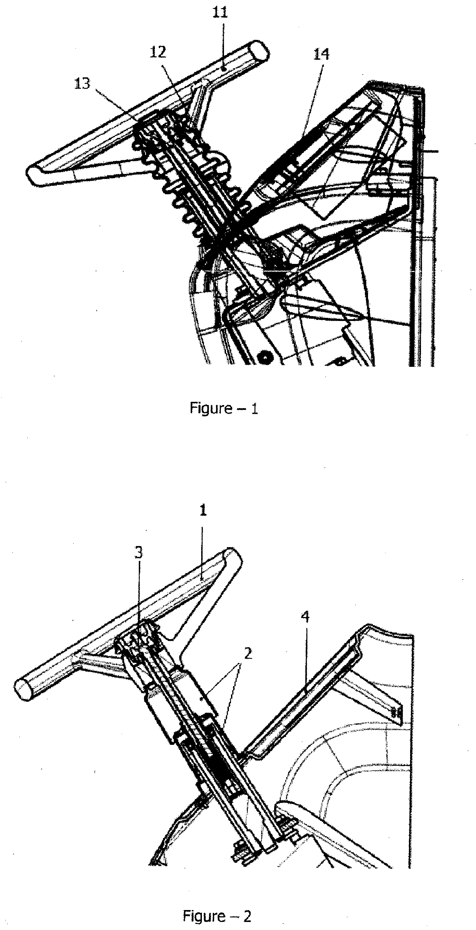

In Figure 1, a steering column containing a bellow used in today's tractors and part of the known state of the art and an example with regards to how it is protected is shown. In this way, a steering wheel (11), a steering column bellow (12), a height adjustable steering column (13) and the rear bodywork (14) is shown. During the upwards and downwards movement of the steering column (13), the steering bellow (12) is tightened after the downwards movement of the steering. As for after the upward movement of the column (13), the bellow (12) attempts to gather itself in the upward direction my means of its nodes. This movement of the bellow (12) is affected by weather conditions over time and leads to tearing. Moreover, due to the present bellow (12) not being able to be fixed onto the steering wheel (11), leads to wearing in the internal parts such as the bearing members and fastening members in the internal sections of the column (13).

By means of the present invention, problems described above, such as both the power steering column and part of the rear bodywork in contact with the column losing functionality due to tears in the bellow over time are eliminated. Figure 2 shows the described steering system containing a sealed, telescopic steering column cover (2) of the invention. The said steering system consists of a steering wheel (1), a sealed telescopic steering cover (2), a height adjustable steering column (3) and rear bodywork (4).

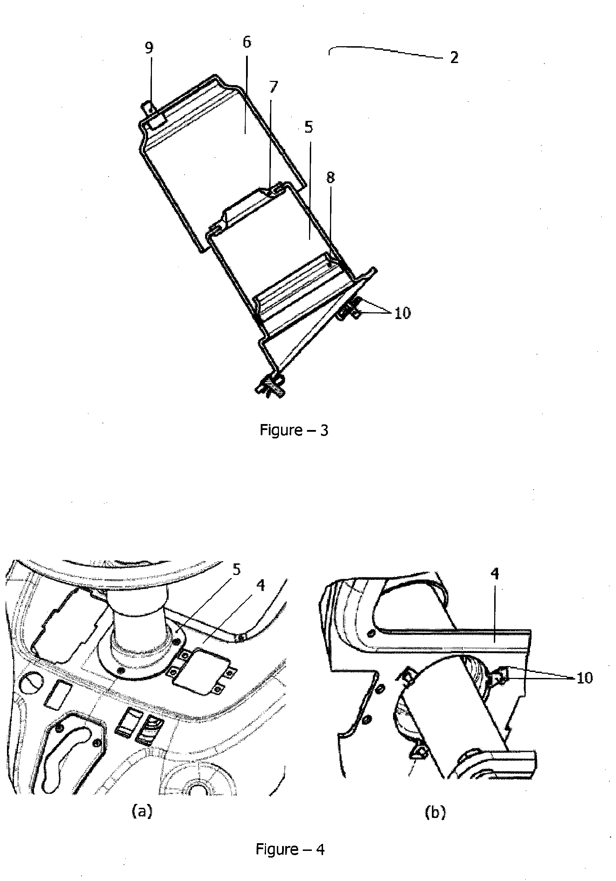

The sealed telescopic steering column cover (2) of the invention is shown in Figure 3 and consists of a telescopic cover bottom part (5), a telescopic cover top part (6), at least one cover top sealing member (7), at least one cover bottom sealing member (8), connection bolts (9) for the steering wheel (9) and connection clamp and bolts (10) for the rear bodywork

The bottom part (5) of the said sealed, telescopic steering column cover (2) is connected to the connection part on the rear bodywork (4) by means of a connection clamp and preferably three bolts (10). By this means, it is provided for the bottom part of the cover (2) to remain stationary. Figure 4 shows the top (a) and bottom (b) view of the said telescopic cover bottom part (5) as it is connected to the rear bodywork (4).

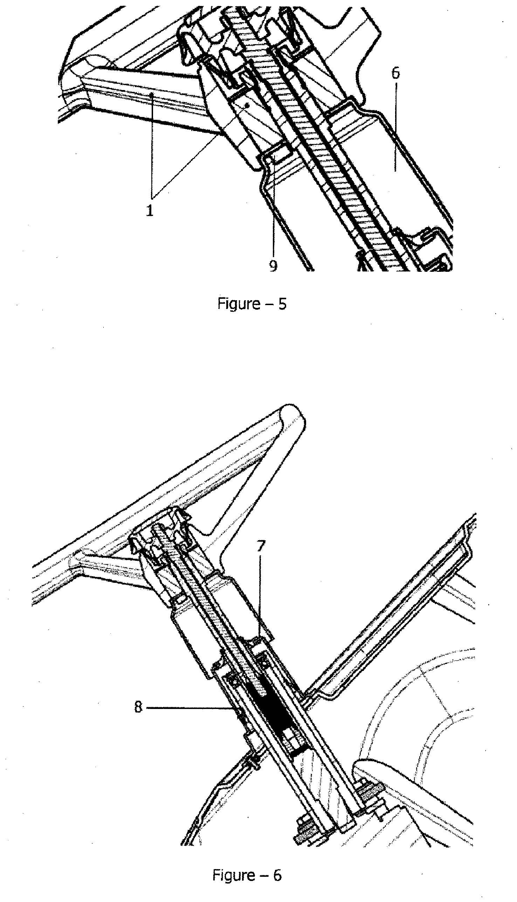

In Figure 5, an illustrative view of the top part (6) of the sealed, telescopic steering column cover (2) as it is connected to the steering wheel (1) is shown. Accordingly, the said telescopic cover top part (6) is connected to the steering wheel (1) preferably by means of two connection bolts (9). By this means, the bottom part (5) of the said cover (2) is stable on the rear bodywork (4) and gains telescopic properties by means of the top part (6) becoming mobile with the steering wheel (1).

As described above, the sealed telescopic steering column cover (2) fixed by means of the assembly of the connection bolts onto the related parts, can be used seamlessly at all height settings of the steering wheel. When the steering wheel (1) is turn left and right, as there is no connection between the telescopic cover bottom part (5) and the top part (6), the steering wheel (1) can be turned comfortably without being exposed to any force.

Figure 6 shows the cover top sealing member (7) and the cover bottom sealing member (8). The bottom sealing member (8) found on the telescopic cover bottom part (5) prevents undesirable factors such as dust, heat, steam, air flow, etc. that come from the motor section and effect the operating performance from reaching inner sections of the steering column (3). Likewise, the top sealing member (7) found on the telescopic cover bottom part (5) prevents undesirable factors such as sun, dust, rainwater, etc. that is found on the top sections from reaching inner sections of the steering column (3).

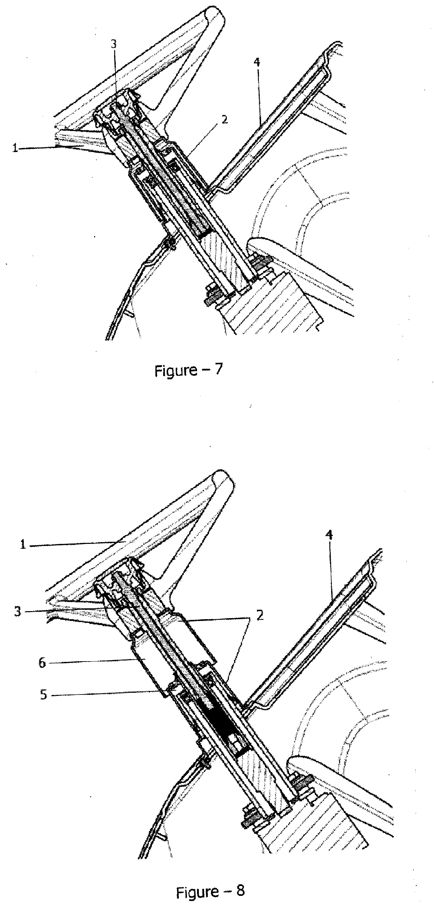

Figure 7 shows an exemplary view of the lowest level position of the height adjustable steering column (3), while Figure 8 shows an exemplary view of its highest level position. When the height adjustable steering column (3) described within the context of the invention is brought to the desired height, the sealed telescopic steering column cover (2), by means of its telescopic feature, acts as an insulating member to not allow any opening around the said column (3).

Another feature of the sealed telescopic steering column cover (3) of the invention is its ability to be easily mounted to tractors pre-manufactured with certain modifications. By this means, the telescopic steering column cover (2) may also be installed to tractors from factory, which do not consist of the cover, and it may be used seamlessly for many years in order to avoid premature wear of the internal parts of the column.

By means of this invention, the service life of the internal parts found inside the column (3) and which effect driving safety is extended and their performance is protected.

## Claims

1. A sealed, telescopic steering column cover (2), comprising;
• A telescopic cover bottom part (5),
• A telescopic cover top part (6),
• At least one top sealing member (7) provided on the said telescopic cover bottom part (5) and
• At least one bottom sealing member (8) provided on the said telescopic cover bottom part
**characterized in that** said telescopic cover top part (6) is connected to the steering wheel (1) preferably by means of two connection bolts (9).

2. The sealed, telescopic steering column cover (2) in Claim 1, **characterized in that** said telescopic cover bottom part (5) is connected to the connection part on the rear bodywork (4) by means of a connection clamp and preferably three bolts (10).

3. The sealed, telescopic steering column cover (2) in any of Claim 1 and 2, The sealed, telescopic steering column cover (2) in any of Claim 1 and 3, **characterized in that** said telescopic cover bottom part (5) is fixed onto the rear bodywork (4) and gains telescopic properties by means of the telescopic cover top part (6) becoming mobile with the steering wheel (1).

4. The sealed, telescopic steering column cover (2) in Claim 1, **characterized in that** it comprises a height adjustable steering column (3).

## Patentansprüche

1. Eine abgedichtete, teleskopierbare Lenksäulenabdeckung (2), umfassend;
• Einen teleskopierbaren Abdeckungsunterteil (5),
• Einen teleskopierbaren Abdeckungsoberteil (6),
• Mindestens ein Dichtungselement (7), das auf dem teleskopierbaren Abdeckungsunterteil (5) vorgesehen ist, und
• Mindestens ein unteres Dichtungselement (8), das auf dem teleskopierbaren Abdeckungsunterteil vorgesehen ist,
**dadurch gekennzeichnet, dass** der teleskopierbaren Abdeckungsoberteil (6) mit der Lenksäule (1), vorzugsweise mittels zwei Verbindungsbolzen (9) verbunden ist.

2. Die abgedichtete, teleskopierbare Lenksäulenabdeckung (2) in Anspruch 1, **dadurch gekennzeichnet, dass** der teleskopierbare Abdeckungsunterteil (5) mit dem Teil auf der hinteren Karosserie (4) mittels einer Klemmverbindung und vorzugsweise drei Bolzen (10) verbunden ist.

3. Die abgedichtete, teleskopierbare Lenksäulenabdeckung (2) in einem der Ansprüche 1 und 3 **dadurch gekennzeichnet, dass** der abgedichtete teleskopierbare Abdeckungsunterteil (5) auf der hinteren Karosserie (4) befestigt ist und teleskopische Eigenschaften erhält, indem teleskopierbare Abdeckungsoberteil (6) mit dem Lenkrad (1) beweglich wird.

4. Die abgedichtete, teleskopierbare Lenksäulenabdeckung (2) in Anspruch 1, **dadurch gekennzeichnet, dass** sie eine höhenverstellbare Lenksäule (3) umfasst.

## Revendications

1. Couvercle de colonne de direction télescopique scellé (2) comprenant:
• Une partie inférieure de couvercle télescopique (5),
• Une partie supérieure de couvercle télescopique (6),
• Au moins un élément d'étanchéité supérieur (7) prévu sur ladite partie inférieure (5) du couvercle télescopique et
• Au moins un élément d'obturation inférieur (8) prévu sur ladite partie inférieure de la housse télescopique, **caractérisé en ce que** ladite partie supérieure (6) du couvercle télescopique est reliée au volant (1) de préférence au moyen de deux boulons de connexion (9).

2. Couvercle de colonne de direction télescopique scellé (2) selon la revendication 1, **caractérisé en ce que** ladite partie inférieure de couvercle télescopique (5) est reliée à la partie de liaison sur la carrosserie arrière (4) au moyen d'une pince de raccordement et de préférence trois boulons (10).

3. Couvercle de colonne de direction télescopique scellé (2) selon l'une des revendications 1 et 2, Couvercle de colonne de direction télescopique scellé (2) selon l'une quelconque des revendications 1 et 3, **caractérisé en ce que** ladite partie inférieure de couvercle télescopique (5) est fixée sur la carrosserie arrière (4) et acquiert des propriétés télescopiques au moyen de la partie supérieure (6) du couvercle télescopique devenant mobile avec le volant (1).

4. Couvercle de colonne de direction télescopique scellé (2) selon la revendication 1, **caractérisé en ce qu'**il comprend une colonne de direction réglable en hauteur (3).
